# EUROPEAN PATENT SPECIFICATION

(11) **EP 2 225 146 B1**
(45) Date of publication and mention of the grant of the patent: **07.03.2012**
(21) Application number: 08853387.2
(22) Date of filing: 27.11.2008
(51) Int. Cl.: B62K 27/00, B60D 1/06, B62B 1/12, B62B 7/02, B62B 7/12, B62B 9/00, B62K 27/12

(54) **LIGHT TRANSPORT VEHICLE**
LEICHTTRANSPORTFAHRZEUG
VEHICULE DE TRANSPORT LEGER

(30) Priority: 30.11.2007 US 991225 P
(43) Date of publication of application: 08.09.2010
(60) Divisional application: 11176887.5
(73) Proprietor: Assaf, Imad, Calgary, AB T3H 3A5 (CA)
(72) Inventor: Assaf, Imad, Calgary, AB T3H 3A5 (CA)
(74) Representative: Schaich, Axel
(86) International application number: PCT/CA2008/002103
(87) International publication number: WO 2009/067818

(56) References cited:
- DE-A1-102004 057 193
- DE-U1- 20 208 353
- DE-U1- 29 504 755
- US-A- 3 797 846
- US-A- 5 474 316
- US-A- 5 577 746
- US-A- 5 687 980
- US-A- 5 785 333
- US-A- 5 829 770
- US-A- 5 829 771
- US-A- 6 099 008
- US-A- 6 164 673
- US-A1- 2008 042 473
- US-B1- 7 387 310
- US-B2- 6 575 485
- US-B2- 6 929 274

## Description

### RELATED APPLICATIONS

This application claims the benefit of priority to PCT application number PCT/CA2008/002103, filed November 27, 2008 which claims the benefit of priority to US provisional application 60/991,225 filed November 30, 2007.

### FIELD OF THE INVENTION

The invention relates to a light transport vehicle convertible to a bicycle trailer, a jogger, a stroller, a sled or other configurations that is useful for transporting children, animals and/or cargo. More specifically, the invention provides an improved transport vehicle with an easy and compact folding mechanism.

### BACKGROUND OF THE INVENTION

Joggers, strollers and bicycle trailers are well known light transport vehicles (LTV) used for transporting small children, animals and/or cargo. Besides offering durability, function and safety, the LTV is preferably easily folded to a smaller size for storage, be easily unfolded, be convertible between possible uses, and be readily and securely connected to a bicycle to provide for a smooth ride to the occupant and/or cargo.

While many LTVs are known, there continues to be a need for systems with improved features such as fewer parts, a more stable structure in both folded and unfolded configurations, that requires less effort to collapse or erect and can be more readily converted between different configurations such as a bicycle trailer, jogger, stroller, etc.

More specifically, there has been a need for an LTV that includes
an improved folding system that is easier to use while maintaining a strong and compact structure; and,
all of which individually and collectively improve safety, performance and/or comfort to the user/cargo/occupants of the LTV.

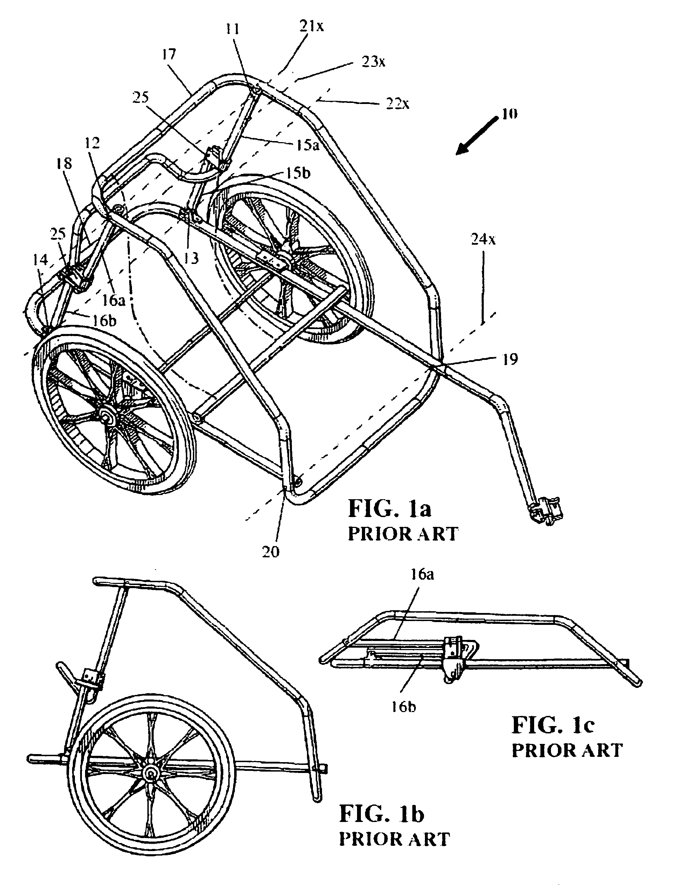

A review of the prior art shows that such improvements to LTVs have not been provided. For example, U.S. Pat. No. 5,577,746 (Britton) discloses a folding transport vehicle as shown in FIGURES 1a, 1b and 1c. The trailer has folding frame unit with a first end and an opposite end. The first end pivots directly on a predetermined axis through the upper frame which allows for only one degree of movement freedom, rotational, for the first end relative to the upper frame. The opposite end pivots directly on a predetermined axis through the lower chassis which allows for only one degree of movement freedom, rotational, for the opposite end relative to the lower chassis. An intermediate pivot point on the folding frame unit allows the first end to pivot in relation to the opposite end. The collapsing and extending of the Britton transport vehicle is feasible only when the axes through the three pivot connections, of each folding frame unit, are substantially parallel to each other and substantially parallel to the axis through the pivot connection between the upper frame and the lower chassis. This limits the collapse direction of the folding frame unit toward the front of the vehicle or to extend behind the vehicle (perpendicular to the axis of rotation). Document DE 10 2004 057 193 shows the preamble of claim 1.

As a result, there has been a need for an LTV frame with the following objectives:
a. a strong structure for safety and durability;
b. an easy collapsing and extending function, and preferably single-action/handed execution;
c. a compact collapsed size for handling and storage;
d. stable collapsed configuration for handling; and,
e. a large occupant and cargo compartment.

Achieving the preceding objectives has been a challenge. In the LTV disclosed by Britton, a cross member has to extend between the folding frame units to provide for a strong structure and single-action folding. Extending the collapsed folding frame units behind the vehicle increases the collapsed size of the vehicle significantly. Extending the collapsed folding frame unit toward the front of the vehicle reduces the usable width of the vehicle that can be utilized for the interior compartment, and may cause interference with the vehicle's cover or seat. As shown in FIGURE 1c, the folding frame units are collapsed toward the front of the vehicle, and the cross member (extending between the folding frame units) travels far into the vehicle's compartment. While FIGURE 1c does not show a vehicle cover or seat, the potential interference is clear. The only remedy for this interference is to eliminate the cross member which yields a weaker structure and a two-action folding procedure, or to move the seat considerably forward which significantly reduces the occupant/cargo compartment. Another disadvantage of an LTV with folding frame units that collapse in the forward direction is that the structure is vulnerable in rear impact accidents (for example, an LTV used as a bicycle trailer that is impacted by a motor vehicle from behind). In addition to the preceding disadvantages, the LTV of FIGURE 1c has an unstable folding configuration that tends to extend while handling. As a result, there has been a need for a strong structure that collapses in a single-action; and the support frames fold in a location that does not interfere with the vehicle's cover or seat, thus maximizing the usable compartment space while minimizing the collapsed size. In addition, there has been a need for an LTV having a more stable collapsed configuration for improved handling.

### SUMMARY OF THE INVENTION

In accordance with the invention, a transport vehicle is described. The invention provides a transport vehicle according claim 1.

In various embodiments, the second ends of the upper frame and lower chassis are displaceable past one another and/or the folding connector comprises at least one pivot connection.

In another embodiment, a second support frame and folding connector, third and fourth connections brackets and a cross arm are operatively connected to between the first and second support frames.

In another embodiment, the folding connector includes a biasing member for biasing the upper and lower support members to an opening position. In another embodiment each connection bracket includes a ball and socket joint.

In one embodiment, in the collapsed position, the support frame is retained in a location between the second ends of the lower chassis and upper frame and in another embodiment, the rear end of the lower chassis is raised to reduce the distance between the upper frame second end and the lower chassis second end thus reducing the height of the support frame and consequently reducing the collapsed size of the transport vehicle.

### BRIEF DESCRIPTION OF THE DRAWINGS

The invention is described with reference to the drawings in which:
Figures 1a, 1b and 1c are views of a folding trailer in accordance with the prior art. Figure 1a is a perspective view of the trailer in the operative position, Figure. 1b is a side view of the trailer in the operative position and Figure 1c is a side view of the trailer in the collapsed position.
Figures 2a, 2b, 2c and 2d are views of an embodiment of a folding vehicle of the present invention. Figure 2a is a perspective view, Figure 2b is a side view, Figure 2c is a top view and Figure 2d is a back view.
Figure 3a is a perspective view of a universal joint in accordance with the prior art.
Figure 3b is a perspective view of a universal joint of the present invention and
Figure 3c is a perspective view of a ball joint of the present invention.
Figures 4a, 4b, 4c and 4d are views of a folding connector of the present invention. Figure 4a is a front view in the extended position, Figure 4b is a perspective view in the extended position, Figure 4c is a front view in the collapsed position and Figure 4d is a perspective view in the collapsed position.
Figure 5 is a perspective view of the vehicle of Figure 2a in the partially collapsed position.
Figures 6a, 6b, 6c and 6d are views of the folding mechanism of the vehicle of Figure 2a.
Figures 7a, 7b, 7c and 7d are views of the vehicle of Figure 2a in the collapsed compact position. Figure 7a is a perspective view, Figure 7b is a side view, Figure 7c is a back view and Figure 7d is a top view.
Figure 8a is a perspective view of a preferred embodiment of a folding vehicle of the present invention. Figure 8b, 8c, 8d and 8e are views of the folding mechanism of the vehicle of Figure 8a.
Figure 9a is a perspective view of a preferred embodiment of a folding vehicle of the present invention.
Figures 9b, 9c and 9d are views of the folding mechanism of the vehicle of Figure 9a.
Figure 10 is a perspective view of a preferred embodiment of a folding vehicle of the present invention.

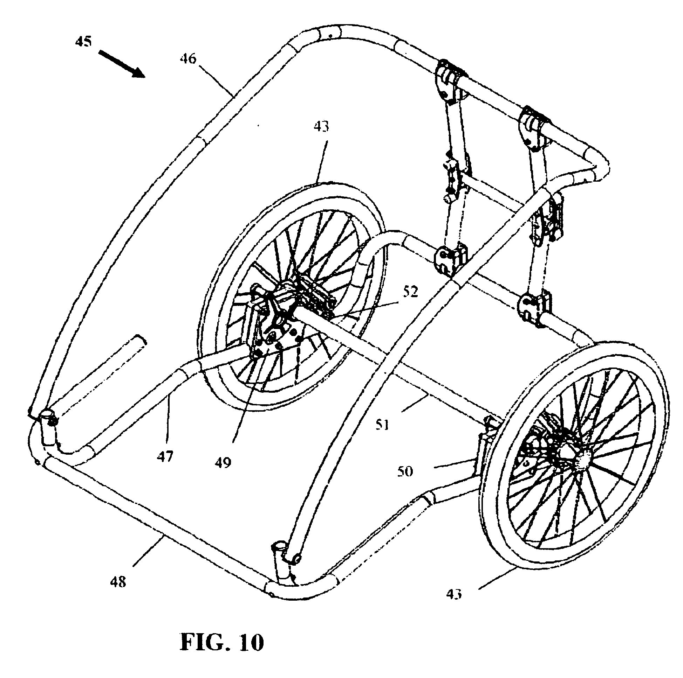

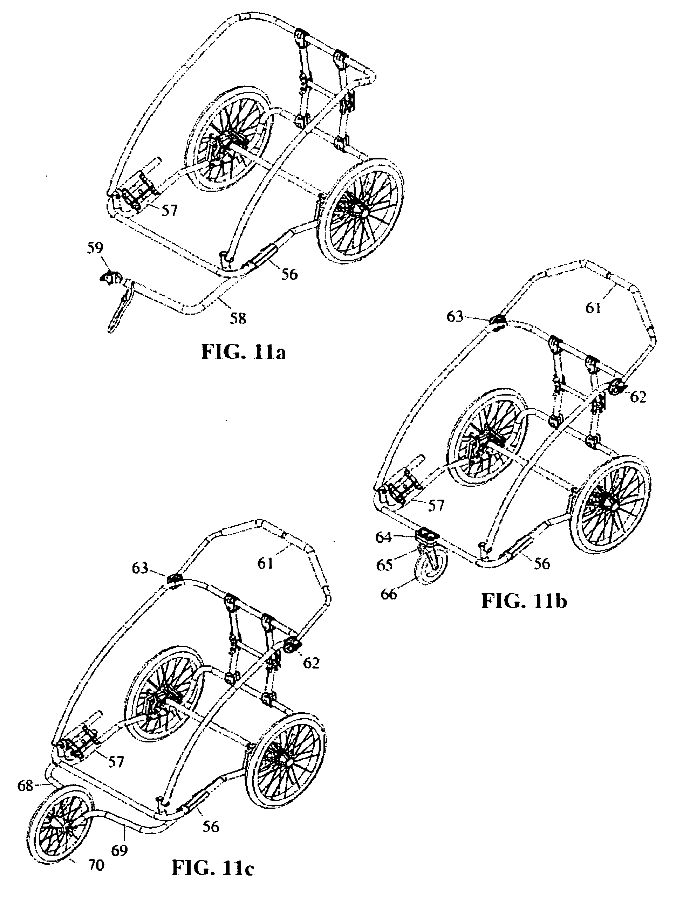

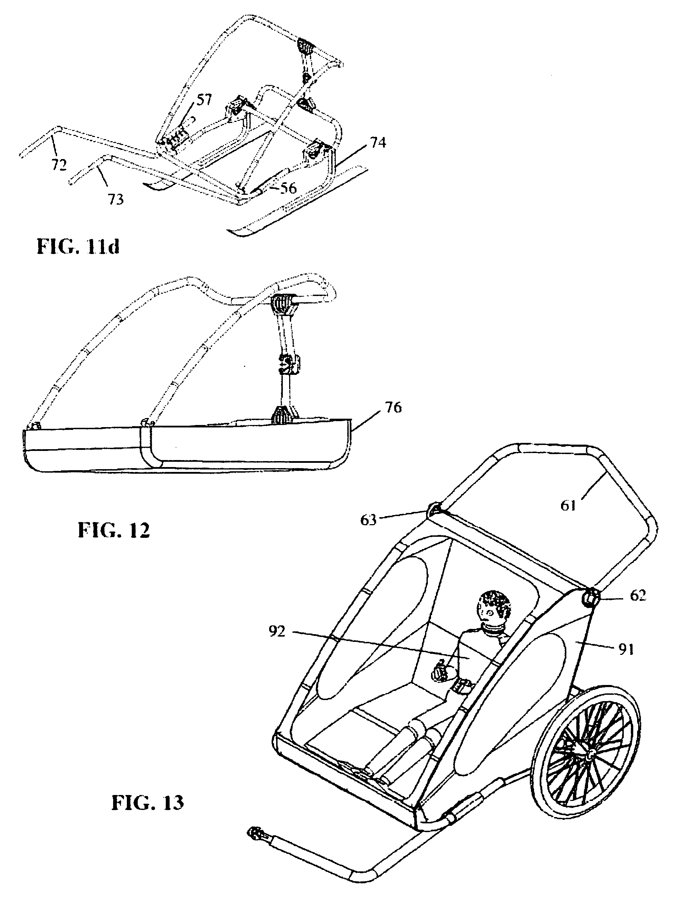

Figures 11a, 11b, 11c and 11d are views of a vehicle of the current invention in different function configurations. Figure 11a is a perspective view of the vehicle of Figure 10 with the addition of two attachment receivers, tow bar and hitch. The vehicle in Figure 11a is useable as a bicycle trailer. Figure 11b is a perspective view of the vehicle of Figure 10 with the addition of two attachment receivers, one caster receiver, stroller caster assembly and pushing handle assembly. The vehicle in Figure 11b is useable as a stroller. Figure 11c is a perspective view of the vehicle of Figure 10 with the addition of two attachment receivers, two wheel arms, front wheel and pushing handle assembly. The vehicle in Figure 11c is useable as a jogger stroller. Figure 11d is a perspective view of an embodiment of a folding vehicle of the present invention with the addition of two attachment receivers, two tow bars and skis. The vehicle in Figure 11d is useable as a sled.
Figure 12 is a perspective view of an embodiment of a folding vehicle of the present invention wherein the base frame is substantially formed of a plastic base.
Figure 13 is an embodiment of a folding vehicle of the present invention with a compartment cover.

### DETAILED DESCRIPTION OF A PREFERENTIAL EMBODIMENT

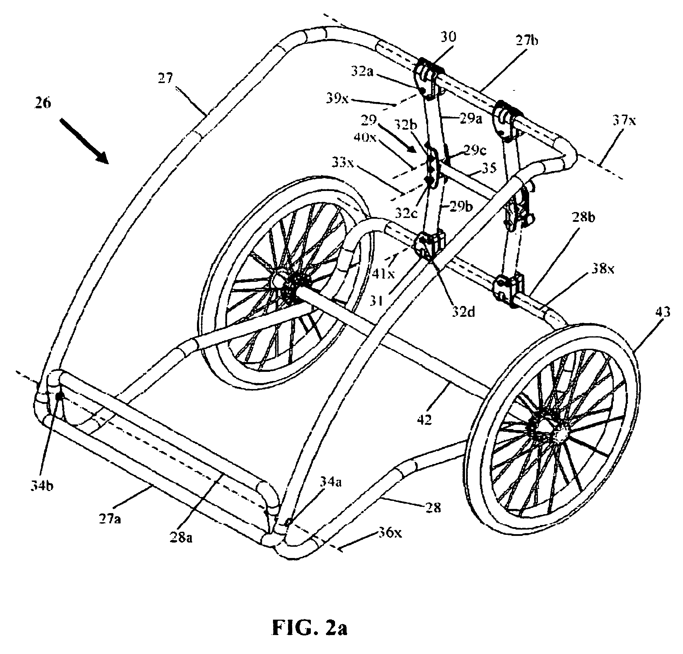

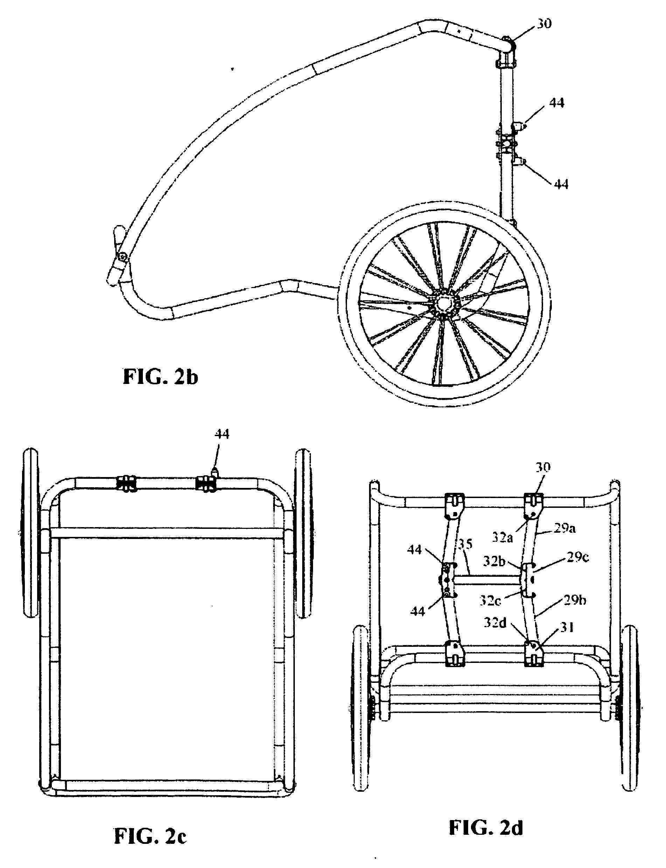

With reference to Figures 2-17 an improved LTV with improved sub-systems is described all of which individually and collectively improve safety, performance and/or comfort to the user/cargo/occupants of the LTV.

### Frame Design

Figure 2a shows a perspective view of an LTV 26 having an upper frame 27, base frame 28, two support frame units 29, two upper connection brackets 30, two lower connection brackets 31 and cross support member 35. The LTV further includes axle 42, secured to base frame 28, for attachment of wheels 43.

Base frame 28 is preferably substantially rectangular in plan view having forward end 28a and rear end 28b. Rear end 28b is higher than the sides of base frame 28. Also, upper frame 27 is preferably substantially rectangular in plan view having forward end 27a and rear end 27b. The upper portion of the trailer's cargo compartment is defined by upper frame 27. Base frame 28 defines the lower portion and rear lower portion of the cargo compartment.

Pivot connections 34a and 34b connect upper frame 27 adjacent its front end 27a to base frame 28 adjacent to its front end 28a. Pivot connections 34a and 34b allow upper frame 27 to rotate in relation to base frame 28 about axis 36x.

Connection bracket 30 allows rotation about two axes that are not parallel (37x and 39x) thus providing a universal joint function. Connection bracket 30 is connected to rear end of upper frame 27b allowing upper frame 27 to rotate about axis 37x. Connection bracket 30 is connected to first support member 29a allowing first support member 29a to rotate about axis 39x. Connection bracket 30 is prevented from moving linearly along axis 37x. Restricting the movement of connection bracket 30 along axis 37x can be accomplished by different ways, for example, by the addition of outside collar or collars (not shown) on rear end 27b of upper frame 27 adjacent to connection bracket 30. Another example is by adding an internal stop feature such as a protrusion in the rear end 27b of upper frame 27 in a location covered by connection bracket 30 and a corresponding internal slot in connection bracket 30. The combination of the protrusion and slot allows for the rotation of connection bracket 30 about the rear end of upper frame 27b and restricts linear motion over the rear end 27b of upper frame 27 along the direction of axis 37x.

Connection bracket 31 allows rotation about two axes that are not parallel (38x and 41 x) thus providing a universal joint function. Connection bracket 31 is connected to rear end 28b of base frame 28 allowing base frame 28 to rotate about axis 38x. Connection bracket 31 is connected to opposite support member 29b allowing opposite support member 29b to rotate about axis 41 x. Connection bracket 31 is prevented from moving linearly along axis 38x. Restricting the movement of connection bracket 31 along axis 38x can be accomplished in different ways, for example, by the addition of outside collar or collars (not shown) on rear end 28b of base frame 28 adjacent to connection bracket 31. Another example is by adding an internal stop feature such as a protrusion in rear end 28b of base frame 28 in a location covered by connection bracket 31 and a corresponding internal slot in connection bracket 31. The combination of the protrusion and slot allows for the rotation of connection bracket 31 about the rear end 28b of base frame 28 and restricts linear motion over rear end 28b of base frame 28 along the direction of axis 38x.

Support frame unit 29 has first support member 29a, opposite support member 29b and folding connector 29c. First support member 29a and opposite support member 29b are connected to folding connector 29c. Folding connector 29c allows first support member 29a to rotate about axis 40x and folding connector 29c allows opposite support member 29b to rotate about axis 33x. The first support member 29a is connected to connection bracket 30 such that first support member 29a can rotate about axis 39x. The opposite support member 29b is connected to connection bracket 31 such that opposite support member 29b can rotate about axis 41 x.

When support frame unit 29 is extended, it maintains the rear end 27b of the upper frame 27 at a predetermined distance from the rear end 28b of base frame 28. This configuration is the preferred operative position of the vehicle.

Figure 2b, 2c and 2d show side, top and back views of vehicle 26 of Figure 2a. Figures 2b, 2c and 2d show one folding connector 29c with two openings 44 for a securing pin (not shown). Opening 44 with a corresponding opening in first support member 29a and opposite support member 29b allow for the insertion of securing pins. Securing pins, when inserted through openings 40 and through first support member 29a and opposite support member 29b, locks rotation about axes 33x, 36x, 37x, 38x, 39x, 40x and 41 x thus maintaining the vehicle extended in the preferred operative position.

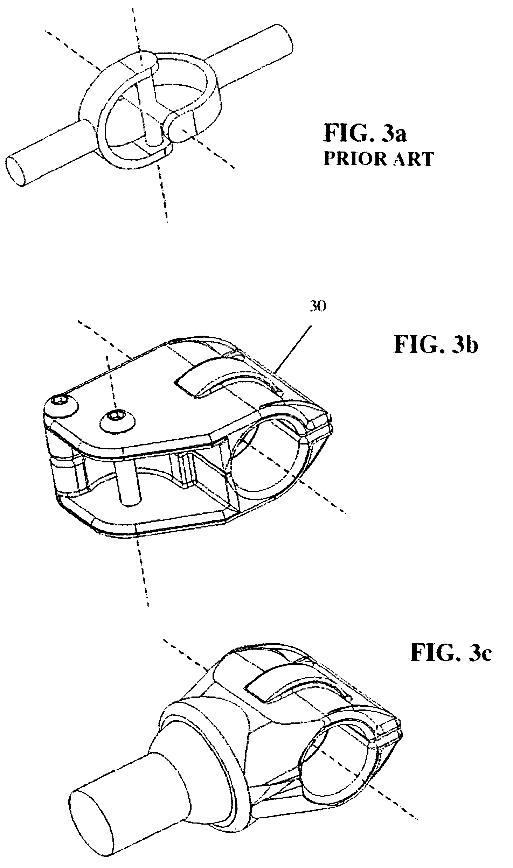

Figure 3a shows a universal joint known in the art. The axes of rotation are shown on the universal joint of Figure 3a.

Figure 3b shows connection bracket 30 with the axes of rotation illustrated. The connection bracket 30 allows for connection to a round surface and simultaneous rotation about that surface.

Figure 3c shows an alternative to connection bracket 30 of Figure 3b. The connection bracket of Figure 3c is a ball joint type. In addition to the flexibility of ball joint movement, it is also capable of rotation about an axis on the connection bracket (shown on Figure 3c).

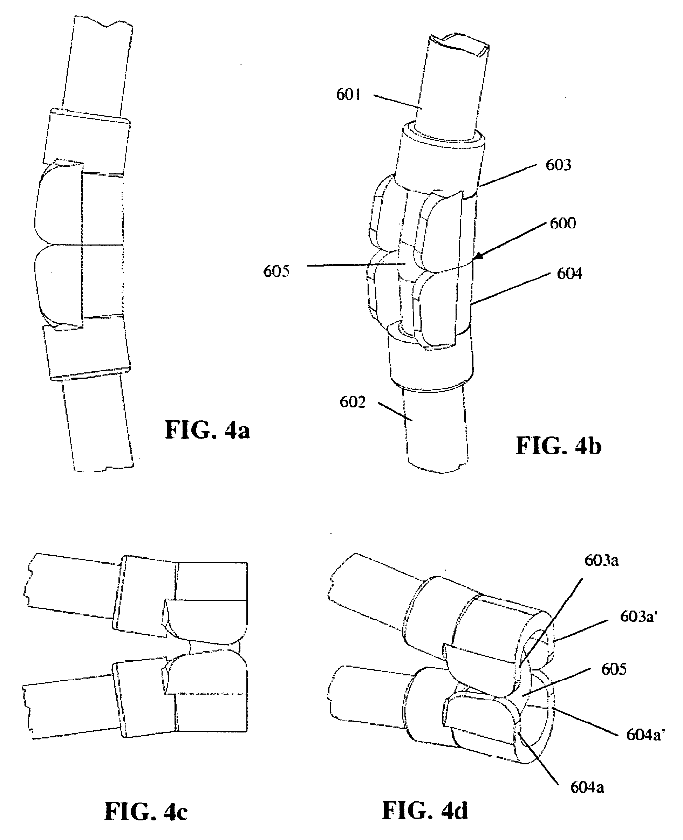

Figures 4a, 4b, 4c and 4d are views of a folding connector 600 of the present invention. Figure 4a is a front view in the extended position, Figure 4b is a perspective view in the extended position, Figure 4c is a front view in the collapsed position and Figure 4d is a perspective view in the collapsed position. Figures 4a, 4b, 4c and 4d are shown with partial first support member 601, partial opposite support member 602 and folding connector 600. The folding connector 600 includes a first connector 603 (fixed to first support member 601), opposite connector 604 (fixed to opposite support member 602) and resilient flexible member 605 (connecting first connector 603 and opposite connector 604). In addition, each of the first connector and opposite connector includes contacting surfaces 603a, 603a' and 604a, 604a' that provide guidance and protection to the folding connector as it is being folded or un-folded. More specifically, each of the contacting surfaces includes an arcuate edge that is biased towards and engages with a corresponding surface (e.g. 603a and 604a) such that the resilient flexible member 605 is stretched as the connector is folded.

As a result, when folding connector 600 is in the collapsed position, flexed resilient flexible member 605 tries to return toward its un-deformed shape.

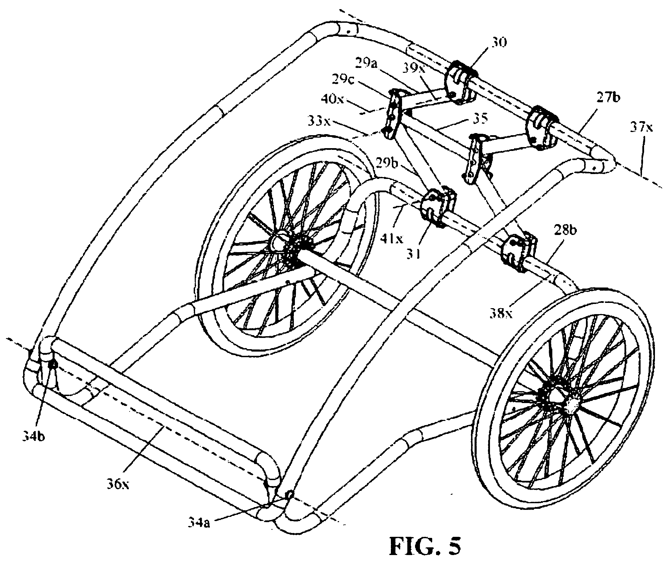

Figure 5 shows vehicle 26 of Figure 2a in a partially folded position. Support frame unit 29 folds from an extended position to a collapsed position by rotating first support member 29a about axis 40x (of folding connector 29c), rotating opposite support member 29b about axis 33x (of folding connector 29c), and thereby, rotating first support member 29a (in relation to connection bracket 30) about axis 39x and rotating opposite support member 29b (in relation to connection bracket 31) about axis 41 x. As support frame unit 29 is folded from an extended position to a collapsed position, connection bracket 30 rotates about axis 37x, connection bracket 31 rotates about axis 38x and upper frame 27 rotates towards base frame 28 (about axis 36x) and thereby fold vehicle 26 into a compact position. Folding connectors 29c are fixed onto cross support member 35 such that all folding connectors 29c are parallel to each other.

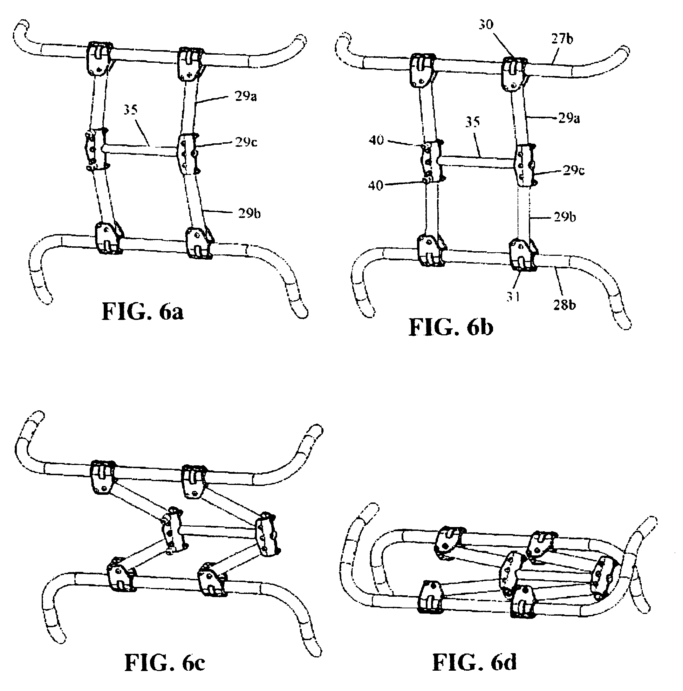

Figure 6a, 6b, 6c and 6d show partial perspective views of the back of vehicle 26 of Figure 2a. Figure 6a shows the extended position, Figure 6b shows the start of the collapsing process, Figure 6c shows a partially collapsed position and Figure 6d shows the collapsed position where the support members 29a, 29b have been fully pivoted about the frame which, rear end 27b of upper frame 27 has moved past and beneath rear end 28b of base frame 28. As a result, the upper and lower frames more securely in the folded position as two directions of movement are required to move support members 29a, 29b back to the extended position. Furthermore, in the case of a connector 600 being utilized, the resiliently flexible member will have a tendency to bias or lock the frame in the fully folded position until the connectors are pivoted away from the upper and lower frame in which case the connector 600 will have a tendency to assist in opening the frame.

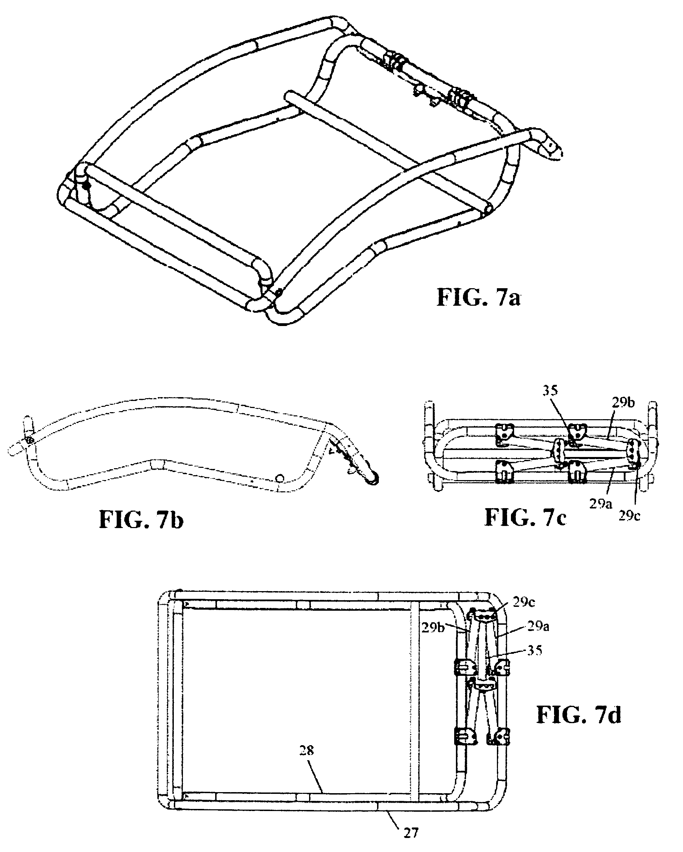

In addition, in Figures 7a, 7b, 7c and 7d (showing perspective, side, back and top views of a collapsed (folded) vehicle 26 of Figure 2a), the support frame units 29 do not interfere with the cargo compartment or extend outside the perimeter of the folded upper frame 27 and base frame 28.

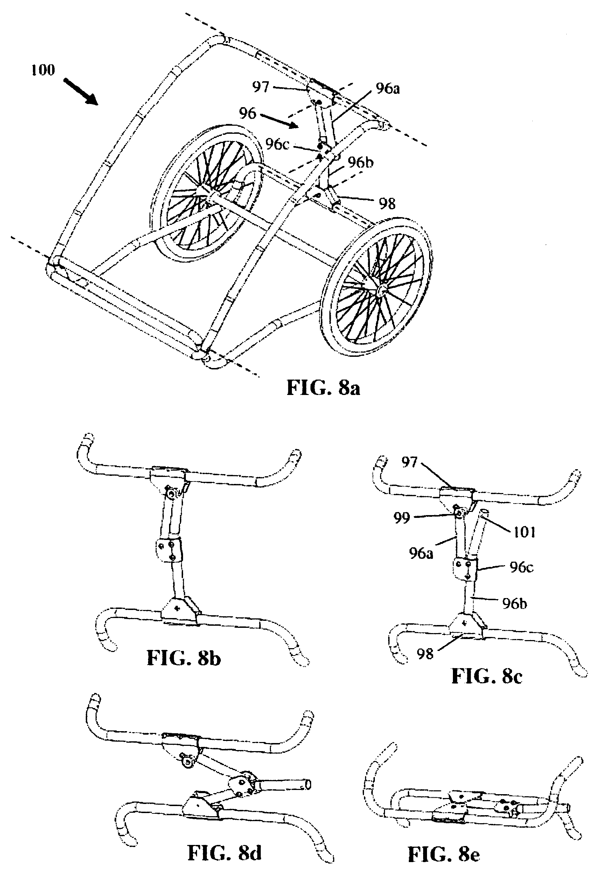

Figure 8a illustrates another embodiment in which the LTV 100 has a single support frame unit 96 with first support member 96a, opposite support member 96b and folding connector 96c and connection brackets 97 and 98. Figures 8b, 8c and 8d show partial perspective views of the back of vehicle 100 of Figure 8a and first support member 96a, opposite support member 96b, folding connector 96c, connection brackets 97 and 98. Figure 8c shows a catch 99 in connection bracket 97 and a corresponding receptacle 101 in opposite frame member 96b. Catch and receptacle 99 and 101 are aligned when support frame unit 96 is in the extended position. The alignment of openings 99 and 101 allows for the insertion of a pin to secure against collapsing of support frame unit 96. Figure 8b shows first support member 96a, opposite support member 96b and folding connector 96c in the extended position. The start of the collapsing process is illustrated in Figure 8c. Figure 8d shows first support member 96a, opposite support member 96b and folding connector 96c when vehicle 100 is partially collapsed. Figure 8e shows first support member 96a, opposite support member 96b and folding connector 96c when vehicle 100 is collapsed.

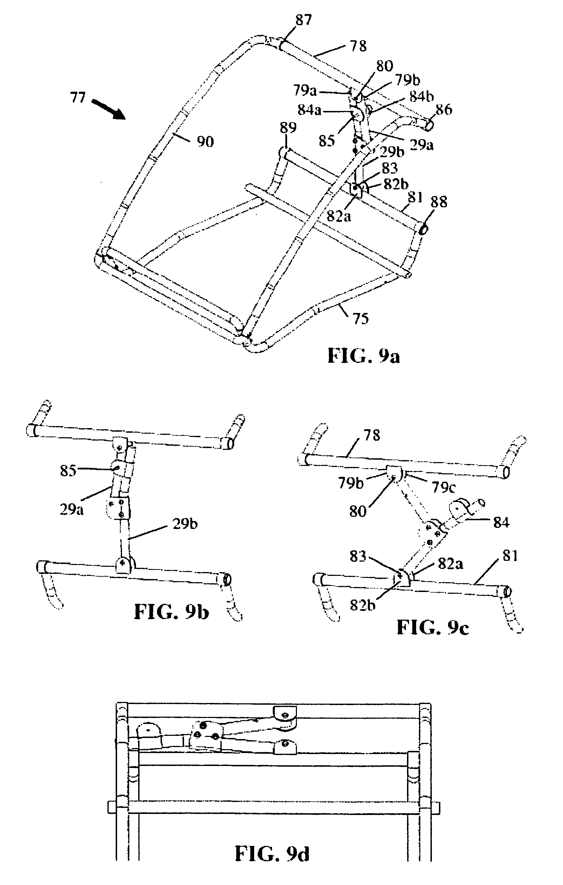

Figure 9a shows a perspective view of vehicle 77 of a further embodiment. In this embodiment, the connection brackets 30 and 31 are replaced by rotation members 78 and 81. Rotation member 78 is connected to upper frame members 90 at connections 86 and 87. Rotation member 81 is connected to base frame 75 at connection 88 and 89. Rotation member 78 has two parallel extensions 79a and 79b with a connection 80 through both extensions 79a and 79b. Connection 80 allows first support member 29a to rotate in relation to rotation member 78. Rotation member 81 has two parallel extensions 82a and 82b with a connection 83 through both extensions 82a and 82b. Connection 83 allows opposite support member 29b to rotate in relation to rotation member 81. Opposite support member 29b has two parallel extensions 84a and 84b with an aperture through both extensions 84a and 84b. The aperture in extensions 84a and 84b aligns with an aperture through first support member 29a when vehicle 77 is in fully extended position. A releasable securing pin 85 is engaged through the aperture in extensions 84a and 84b and the aperture through first support member 29a to maintain vehicle 77 in the fully extended position.

Figures 9b, 9c and 9d show a partial view of vehicle 77 in Figure 9a. Figure 9b shows support members 29a and 29b in the extended position with securing pin 85 engaged. Figure 9c shows the back of vehicle 77 when partially collapsed and Figure 9d shows the collapsed orientation.

Figure 10 illustrates a further embodiment. In this embodiment, vehicle 45 has an upper frame 46 that is substantially U-shaped and is open on its front end, and base frame formed of two members 47 and 48 that are connected adjacent to member 47 front ends. Vehicle 45 further comprises a suspension system 49 and 50 mounted onto member 47. Each suspension system can accept wheel axle 52 and absorb shocks from wheels 43 and reduce their effect on vehicle 45. Each suspension may be further stabilized by adding cross member 51 that connects the suspension systems together. The suspension system is described in greater detail below.

In Figure 11a, vehicle 45 of Figure 10 is shown with two attachment receivers 56 (described in greater detail below) and 57, tow bar 58 and hitch 59. In this configuration, the vehicle is useful as a bicycle trailer.

In Figure 11b, vehicle 45 of Figure 10 is shown with the addition of two attachment receivers 56 and 57, one caster receiver 64, pushing handle 61, pushing handle brackets 62 and 63, caster 65 and caster wheel 66. In this configuration, the vehicle is useful as a stroller.

In Figure 11c, vehicle 45 of Figure 10 is shown with the addition of two attachment receivers 56 and 57, pushing handle 61, pushing handle brackets 62 and 63, wheel arms 68 and 69 and wheel 70. In this configuration, the vehicle is useful as a jogger stroller (for fast walking or running).

In Figure 11d, an embodiment is shown with the addition of two attachment receivers 56 and 57, tow bars 72 and 73 in which wheels are replaced with skis 74. In this configuration, the vehicle is useful as a sled.

In Figure 12, an embodiment is shown where the base frame is substantially formed of a plastic base 76. In this embodiment, the plastic base may provide protection to the occupants and to the vehicle components when folded.

In Figure 13, the vehicle of Figure 8 is shown with the addition of pushing handle 61, pushing handle brackets 62 and 63, compartment cover 91 and passenger 92.

### Other Embodiments

As described above, Figures 2 to 13 show folding connectors 29c and 96c with pivot connections to facilitate the function of the folding connector (collapsing of support frame units 29 and 96). Folding connector 600, shown in Figures 4a to 4d, could replace folding connectors 29c and 96c (in Figures 2 to 13) and provide the same function.

Frame members and brackets in Figures 2 to 13 may be constructed of any suitable materials such as aluminum, steel, plastic or any other suitable material which provide adequate strength and durability. Shapes include tubing, solid rods, sheets or other suitable shapes. Connections including 32a, 32b, 32c, 32d, 34a, 34b, 80 and 83 may be any suitable means such as screws, bolts, pins or rivets. The connections should be durable, capable of repeated use and able to withstand stress. Possible forming processes include (but are not limited to): bending, mold injection, casting, fusing and pressure forming.

## Claims

1. A transport vehicle comprising:
a vehicle frame having a lower chassis (28; 75; 47, 48; 76) supporting and pivotally connected (34a, 34b, 36x) to an upper frame (27; 90) adjacent to first ends (27a, 28a) of the upper frame and lower chassis respectively, and the lower chassis operatively supporting a transportation apparatus;
first and second connection brackets (30, 31; 97, 98; 80, 83) operatively connected to the upper frame and lower chassis respectively, wherein each of the connection brackets allows rotation about at least two non-parallel axes (37x, 38x, 39x, 41 x) passing through the connection brackets such that one of the axes (39x, 41x) is rotatable about the other axis (37x, 38x); and
a support frame (29; 96) operably connected between the first and second connection brackets (30, 31; 97, 98; 80, 83);
the support frame (29, 96) including an upper support member (29a; 96a; 601) and a lower support member (29b; 96b; 602) each having a first member end and a second member end;
wherein the first member ends are connected to one another via a folding connector (29c; 96c; 600) allowing the upper support member (29a; 96a; 601) to pivot toward the lower support member (29b; 96b; 602), and
wherein the second member ends are each rotatably and pivotally connected to the upper frame (27; 90) and lower chassis (28; 75) respectively via the connection brackets (30, 31; 97, 98; 80, 83) such that the second member end of the lower support member (29b; 96b; 602) can both rotate about the lower chassis (28; 75) about a first axis (38x) and pivot relative to the lower chassis about a second axis (41x) and the second member end of the upper support member (29a; 96a; 601) can both rotate about the upper frame (27; 90) about a third axis (37x) and pivot relative to the upper frame about a fourth axis (39x), such that the upper frame and the lower chassis are displaceable in a height direction of the vehicle between an extended position and a collapsed position and the support frame (29; 96) folds in a lateral orientation perpendicular to both the height direction and the forward/rear direction of the vehicle **characterized in that** the first member ends shift the folding connector in a lateral direction perpendicular to both the height direction and the forward/rear direction of the vehicle.

2. A transport vehicle as in claim 1 wherein the second ends (27b; 78, 28b; 81) of the upper frame (27; 90) and the lower chassis (28; 75) are displaceable past one another in the collapsed position such that the second end (27b; 78) of the upper frame is lower than the second end (28b; 81) of the lower chassis.

3. A transport vehicle as in claim 1 further comprising a second support frame (29) and folding connector (29c; 600), third and fourth connection linkages (30, 31) and a cross member (35) operatively connected to the first and second support frames (29).

4. A transport vehicle as in claim 1 wherein the folding connector (600) includes a biasing member (605) for biasing the upper and lower support members to an opening position.

5. A transport vehicle as in claim 1 wherein, in the collapsed position, the support frame (29; 96) is completely retained in a location between the second end (28b; 81) of the lower chassis and the second end (27b; 78) of the upper frame.

6. A transport vehicle as in claim 1 wherein the second end (28b; 81) of the lower chassis (28; 75) is raised to reduce the distance between the second end (27b; 78) of the upper frame (27; 90) and the second end of the lower chassis thus reducing the height of the support frame (29) and consequently reducing the collapsed size of the transport vehicle.

7. A transport vehicle as in claim 1 wherein, in the collapsed position, the support frame (29) is oriented such that the upper support member (29a; 601) is lower than the lower support member (29b; 602) and the rotation of the upper support member away from the lower support member drives the upper frame (27) toward the lower chassis (28) thus maintaining the vehicle frame in the collapsed position.

## Patentansprüche

1. Transportfahrzeug, mit:
einem Fahrzeugrahmen mit einem unteren Chassis (28; 75; 47, 48; 76), das einen oberen Rahmen (27, 90) trägt und mit diesem in der Nähe von ersten Enden (27a, 28a) des oberen Rahmens bzw. des unteren Chassis schwenkbar (34a, 34b, 36x) verbunden ist, wobei das untere Chassis funktionell eine Transportvorrichtung stützt;
ersten und zweiten Verbindungsteilen (30, 31; 97, 98; 80, 83), die funktionell mit dem oberen Rahmen bzw. dem unteren Chassis verbunden sind, wobei jedes der Verbindungsteile eine Drehung um wenigstens zwei nicht parallele Achsen (37x, 38x, 39x, 41x), die durch die Verbindungsteile verlaufen, derart erlaubt, dass eine der Achsen (39x, 41x) um die andere Achse (37x, 38x) drehbar ist; und
einen Stützrahmen (29; 96), der funktionell zwischen den ersten und zweiten Verbindungsteilen (30, 31; 97, 98; 80, 83) verbunden ist;
wobei der Stützrahmen (29; 96) ein oberes Stützelement (29a; 96a; 601) und ein unteres Stützelement (29b; 96b; 602) beinhaltet, von denen jedes ein erstes Elementende und ein zweites Elementende aufweist;
wobei die ersten Elementenden über einen Klappverbinder (29c; 96c; 600) miteinander verbunden sind, der es dem oberen Stützelement (29a; 96a; 601) erlaubt, in Richtung des unteren Stützelements (29b; 96b; 602) zu schwenken, und
wobei jedes der zweiten Elementenden über die Verbindungsteile (30, 31; 97, 98; 80, 83) derart drehbar und schwenkbar mit dem oberen Rahmen (27; 90) bzw. dem unteren Chassis (28; 75) verbunden sind, dass das zweite Elementende des unteren Stützelements (29b; 96b; 602) sowohl um eine erste Achse (38x) um das untere Chassis herum drehen als auch um eine zweite Achse (41x) relativ zu dem unteren Chassis schwenken kann, und das zweite Elementende des oberen Stützelements (29a; 96a; 601) sowohl um eine dritte Achse (37x) um den oberen Rahmen herum drehen als auch um eine vierte Achse (39x) relativ zu dem oberen Rahmen schwenken kann, so dass der obere Rahmen und das untere Chassis in einer Höhenrichtung des Fahrzeugs zwischen einer auseinanderbewegten Position und einer zusammenbewegten Position bewegbar sind und der Stützrahmen (29; 96) in einer seitlichen Richtung lotrecht zu sowohl der Höhenrichtung als auch der Vorwärts-/Rückwärts-Richtung des Fahrzeugs klappt,
**dadurch gekennzeichnet, dass**
die ersten Elementenden den Klappverbinder in einer seitlichen Richtung lotrecht zu sowohl der Höhenrichtung als auch der Vorwärts-/Rückwärts-Richtung des Fahrzeugs verschieben.

2. Transportfahrzeug nach Anspruch 1, bei dem die zweiten Enden (27b; 78, 28b; 81) des oberen Rahmens (27; 90) und des unteren Chassis (28; 75) in der zusammenbewegten Position so gegeneinander bewegbar sind, dass das zweite Ende (27b; 78) des oberen Rahmens niedriger liegt als das zweite Ende (28b; 81) des unteren Chassis.

3. Transportfahrzeug nach Anspruch 1, ferner mit einem zweiten Stützrahmen (29) und Klappverbinder ((29c; 600), dritten und vierten Verbindungsteilen (30, 31) und einem Querelement (35), das funktionell mit dem ersten und dem zweiten Stützrahmen (29) verbunden ist.

4. Transportfahrzeug nach Anspruch 1, bei dem der Klappverbinder (600) ein Vorspannelement (605) zum Vorspannen der oberen und unteren Stützelemente in Richtung einer Öffnungsposition beinhaltet.

5. Transportfahrzeug nach Anspruch 1, bei dem in der zusammenbewegten Position der Stützrahmen (29; 96) vollständig in einem Ort zwischen dem zweiten Ende (28b; 81) des unteren Chassis und dem zweiten Ende (27b; 78) des oberen Rahmens aufgenommen ist.

6. Transportfahrzeug nach Anspruch 1, bei dem das zweite Ende (28b; 81) des unteren Chassis (28; 75) erhöht ist, um den Abstand zwischen dem zweiten Ende (27b; 78) des oberen Rahmens (27; 90) und dem zweiten Ende des unteren Chassis zu verringern, um dadurch die Höhe des Stützrahmens (29) und damit die zusammenbewegte Größe des Transportfahrzeugs zu verringern.

7. Transportfahrzeug nach Anspruch 1, bei dem in der zusammenbewegten Position der Stützrahmen (29) derart orientiert ist, dass das obere Stützelement (29a; 601) niedriger liegt als das untere Stützelement (29b; 602), und die Drehung des oberen Stützelements weg von dem unteren Stützelement den oberen Rahmen (27) zu dem unteren Chassis (28) hin treibt und dadurch den Fahrzeugrahmen in der zusammenbewegten Position hält.

## Revendications

1. Véhicule de transport, comprenant:
un châssis de véhicule avec un châssis inférieur (28, 75, 47, 48, 76) soutenant et articulé pivotable (34a, 34b, 36x) à un cadre supérieur (27, 90) adjacente à premières extrémités (27a, 28a) du cadre supérieur et du châssis inférieur, respectivement, le châssis inférieur soutenant fonctionnellement un appareil de transport;
premiers et deuxièmes supports de connexion (30, 31, 97, 98, 80, 83) reliés fonctionnellement au cadre supérieure et au châssis inférieure, respectivement, chacun des supports de connexion permettant rotation autour d'au moins deux axes non parallèles (37x, 38x, 39x, 41 x) passant par les supports de connexion de telle sorte que l'un des axes (39x, 41x) peut tourner autour de l'autre axe (37x, 38x), et
un cadre de support (29; 96) connecté de manière fonctionnel entre les premiers et deuxièmes supports de connexion (30, 31, 97, 98, 80, 83);
le châssis de support (29, 96) comprenant un membre de support supérieur (29a, 96a, 601) et un membre de support inférieur (29b, 96b, 602), chacun membre ayant une première extrémité et une deuxième extrémité,
les premiers extrémités des membres ayant connectées les uns aux autres via un connecteur de pliage (29c, 96c, 600) permettant au membre de support supérieur (29a, 96a, 601) de pivoter vers le membre de support inférieure (29b, 96b, 602), et
les deuxièmes extrémités des membres ayant chacune connectées au cadre supérieur (27, 90) et au châssis inférieur (28, 75), respectivement, via les supports de connexion (30, 31, 97, 98, 80, 83) de telle manière que la seconde extrémité du membre de support inférieur (29b, 96b, 602) peut tourner autour du châssis inférieur (28, 75) sur une première axe (38x) et pivoter relativement au châssis inférieur sur un deuxième axe (41x), et la seconde extrémité du membre de support supérieur (29a, 96a, 601) peut tourner autour du cadre supérieur (27, 90) sur une troisième axe (37x) et pivoter relativement au cadre supérieur sur une quatrième axe (39x), de telle sorte que le cadre supérieur et le châssis inférieur sont déplaçables dans une direction de la hauteur du véhicule entre une position déployée et une position pliée, et le châssis de support (29, 96) se plie dans une orientation latérale perpendiculaire à la direction de la hauteur et la direction avant/arrière du véhicule,
**caractérisé en ce que**
les premiers extrémités des membres décalent le connecteur de pliage dans une direction latérale perpendiculaire à la direction de la hauteur et la direction avant/arrière du véhicule.

2. Véhicule de transport selon la revendication 1, où les deuxièmes extrémités (27b, 78, 28b, 81) du cadre supérieur (27, 90) et du châssis inférieur (28, 75) sont déplaçables l'une dernière l'autre dans la position pliée de telle sorte que la seconde extrémité (27b, 78) du cadre supérieur est inférieur à la seconde extrémité (28b, 81) du châssis inférieur.

3. Véhicule de transport que dans la revendication 1, comprenant en outre un seconde cadre de support (29) et un seconde connecteur de pliage (29c; 600), troisièmes et quatrièmes supports de connexion (30, 31) et une traverse (35) relié fonctionnellement aux premiers et deuxièmes cadres de support (29).

4. Véhicule de transport selon la revendication 1, où le connecteur de pliage (600) comprend un membre de prétension (605) pour accoupler les membres de support supérieurs et inférieurs vers une position d'ouverture.

5. Véhicule de transport selon la revendication 1, où, en position pliée, le cadre de support (29; 96) est complètement reçu dans un endroit entre la seconde extrémité (28b; 81) du châssis inférieur et la seconde extrémité (27b; 78) du cadre supérieur.

6. Véhicule de transport selon la revendication 1, où la seconde extrémité (28b; 81) du châssis inférieur (28; 75) est soulevée pour réduire la distance entre la seconde extrémité (27b; 78) du cadre supérieur (27; 90) et la seconde extrémité du châssis inférieur, réduisant ainsi la hauteur du cadre de support (29) et en conséquence réduisant la dimension pliée du véhicule de transport.

7. Véhicule de transport selon la revendication 1, où, en position pliée, le cadre de support (29) est orientée de telle sorte que le membre de support supérieur (29a; 601) est situé plus inférieur que le membre de support inférieure (29b; 602) et la rotation du membre de support supérieur loin du membre de support inférieur entraîne le cadre supérieur (27) vers le châssis inférieur (28), maintenant ainsi le cadre du véhicule dans la position pliée.
